Europäisches Patentamt

European Patent Office

Office européen des brevets

(11) Publication number: **0 298 413 B1**

# EUROPEAN PATENT SPECIFICATION

(45) Date of publication of patent specification: **11.03.92**

(51) Int. Cl.⁵: **H05B 6/68**, H02H 3/00, G05D 23/19

(21) Application number: **88110684.3**

(22) Date of filing: **05.07.88**

Divisional application 91101042.9 filed on 05/07/88.

(54) **Control apparatus of an electric appliance.**

(30) Priority: **06.07.87 JP 168058/87**
**28.04.88 JP 106438/88**

(43) Date of publication of application:
**11.01.89 Bulletin 89/02**

(45) Publication of the grant of the patent:
**11.03.92 Bulletin 92/11**

(84) Designated Contracting States:
**DE FR GB IT SE**

(56) References cited:
EP-A- 0 199 264    WO-A-85/03995
WO-A-87/04797    JP-A-60 181 517
SE-B- 449 931    US-A- 4 561 741
US-A- 4 600 962

PATENT ABSTRACTS OF JAPAN vol. 10, no. 25 (M-450)(2082) 31 January 1986, & JP-A-60 181517 (MATSUSHITA DENKI SANGYO K.K.)

(73) Proprietor: **MATSUSHITA ELECTRIC INDUSTRI-AL CO., LTD.**
**1006, Oaza Kadoma**
**Kadoma-shi, Osaka-fu, 571(JP)**

(72) Inventor: **Kurita, Hitoshi**
**5729-12, Yata-cho**
**Yamatokoriyama-shi Nara-ken(JP)**
Inventor: **Senda, Hiroyuki**
**4-5-5, Saidaijikitamachi**
**Nara-shi Nara-ken(JP)**
Inventor: **Terasaki, Hiroshi**
**296-10, Tawarakuchi-cho**
**Ikoma-shi Nara-ken(JP)**

(74) Representative: **Eisenführ, Speiser & Strasse**
**Martinistrasse 24**
**W-2800 Bremen 1(DE)**

## Description

The invention relates to a control apparatus of an electric appliance having a plurality of functions which can be operated individually, particularly of a heating appliance having a plurality of heating means, comprising a plurality of load devices to achieve the functions, switching means to switch electric power to the load devices, input means to select desired functions, display means to display the operation of the load devices and the selected functions, and a control unit to effect the operation of the load devices through the switching means in accordance with the functions selected by the input means and to control the display means. The invention may also be applied to other electric appliances like washing machines and coolers.

Generally, recent commodities are considerable in diversity. In terms of heating apparatuses, single function electronic ranges, single function electric ovens, commodities intended for higher outputs by two high-frequency generating apparatuses mounted therein, compound commodities having both conventional and high-frequency heating in the form of alternate or simultaneous heating are known. Accordingly, heater, high-frequency heating apparatus which are function components of the commodities, relay components for connecting them are extremely increased in number. For example, a high-frequency heating apparatus with two high-frequency heating apparatuses requires two high-voltage transformes, two high-voltage capacitors, two magnetrons and two high-voltage diodes, which are the function components, two relay apparatuses and so on for controlling them. The frequency of failures with the functional components increases with larger numbers of the components. The failures of the functional components cause dangerous conditions like abnormal current flow, fuming, ignition, insulation deterioration and so on.

Also, more time is taken to locate which component is out of order so as to repair it, because of the large number of components.

From EP-A-199 264 an electric appliance in the form of a combined microwave oven is known having a plurality of different heating means, i.e. resistance heaters and a microwave heater. The functions of these heaters are controlled by a control unit which are operated in accordance with input means for selecting desired functions. If one part in such an electric appliance is defective, for instance the resistance heater or the microwave heater, or any other part controlling these heaters, the whole appliance would not be usable, particularly if further operation of the defective parts could lead to abnormal high currents or the like.

It is an object of the present invention to provide a control apparatus of an electric appliance, which allows further operation of those parts of the appliance which are not defective, whereas the defective parts are put out of operation.

For solving this object, a control apparatus as defined above is characterized by monitoring means to monitor the operating conditions of the load devices and to judge these in comparison with normal conditions stored in the control unit, the control unit disabling only those load devices in which abnormalities are detected, and displaying the abnormal condition on the display means.

With such a control apparatus, further operation of the usable components of an electric appliance are possible, such components being for instance heaters, motors, compressors, high-voltage transformers, high-voltage capacitors, diodes and magnetrons. Only the faulty components are being stopped from operation, so that the other components can still be used.

Preferable embodiments are defined in the dependent claims.

These and other features of the present invention will become apparent from the following description taken in conjunction with preferred embodiments thereof with reference to the accompanying drawings, throughout which like parts are designated by like reference numerals, and in which:

Fig. 1 is a sectional view of the major body of a heating apparatus having a plurality of heating means;

Fig. 2 is a circuit diagram thereof; and

Fig. 3 is a flow chart on the failure examination of the major control portion thereof.

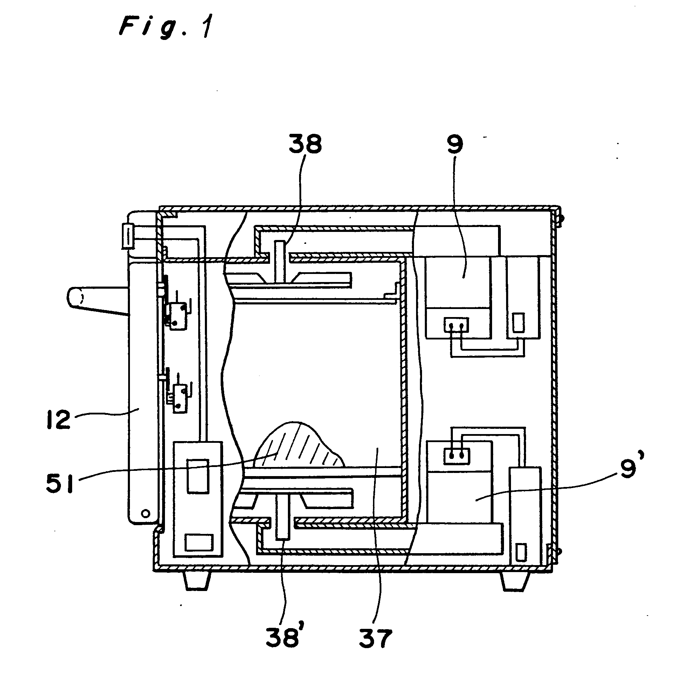

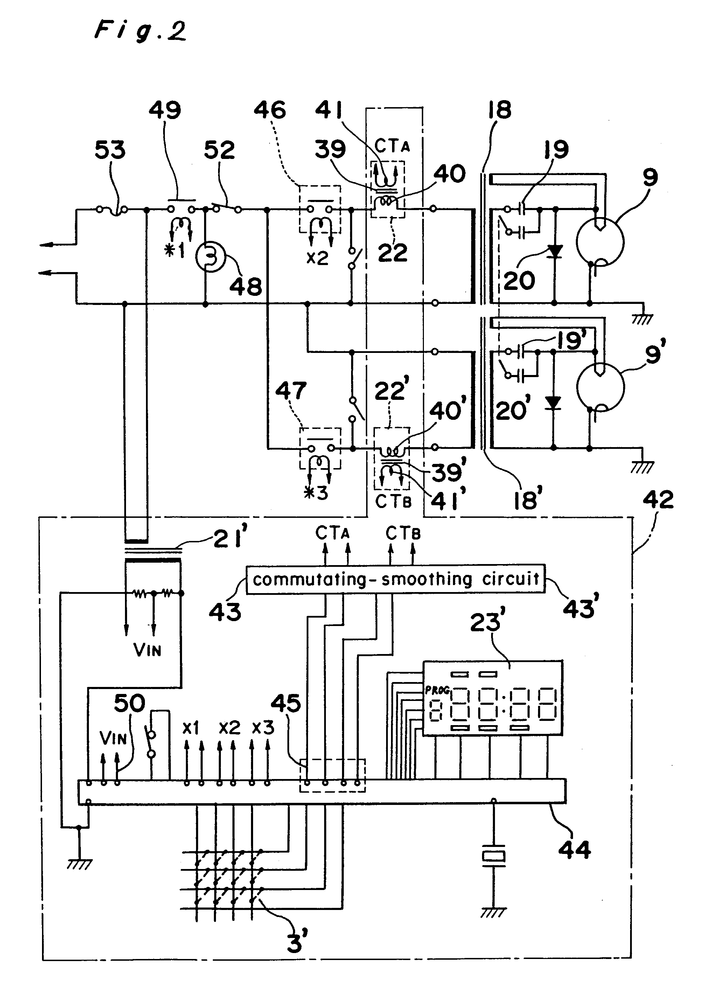

A high-frequency heating apparatus having a plurality of magnetrons will be described hereinafter as an embodiment. In order to increase the high-frequency output, in Fig. 1 Fig. 2, two magnetrons 9,9' are provided on two waveguides 38, 38' with the same specification being disposed in the upper portion and the lower portion of a heating chamber 37.

The power converted into necessary operation voltages is fed to the magnetrons 9 and 9' by a high-voltage circuit composed of two high-voltage transformers 18, 18' of the same specification, high-voltage capacitors 19, 19', and high-voltage diodes 20, 20'.

Current transformers 22, 22' are provided as current detection means at the AC primary side.

The current transformers 22, 22' are provided with coils 40, 40' being wound on iron cores 39, 39', and coils 41, 41' insulated therefrom and wound likewise on the iron cores 39, 39'.

The current transformers 22, 22', together with other electronic components on a print base plate 42 constitute a control portion for controlling the main body. When the high-frequency heating apparatus is operating, current flows through the coils 40, 40', and likewise through the coils 41, 41' to excite the respective iron cores 39, 39'. The magnetic flux causes a voltage, in the coils 41, 41', corresponding to the current on the primary side. The voltages caused in coils 41, 41' are fed through rectification smoothing circuits 43, 43' to convert them into DC. The number of the respective coils, the size of the iron cores, the capacitor of the rectification circuit, and the values of the resistors are set so that the output voltage converted into this direct current may be proportional to the currents flowing through the coils 40, 41' at the AC primary side. In the embodiment (concretely), the output voltage is adapted to become 4V when the current flowing through coils 40, 40' is 10A, and becomes 0.4V when the current is 1A. The outputs of the rectification smoothing circuits 43, 43' are connected with inputs 45 of a microcomputer circuit 44 which is a main control unit.

The microcomputer circuit 44 is connected with a key-board 3' for controlling the high-frequency heating apparatus main body, a fluorescent display tube 23' as display means showing the operating condition, and intermittent relays 46 and 47 for interrupting the high-frequency heating operation of each unit, and a lamp relay 49 to be used for interruption of an illumination lamp 48 within the heating chamber to control the operation of the main body in accordance with a procedure programmed in advance. The microcomputer circuit 44 is operated by power provided by a low-voltage transformer 21', and through the conversion thereof into the direct current.

Also, a voltage input end 50 for taking in one portion of the output voltage on the secondary side of the low-voltage transformer 21' is provided on the microcomputer circuit 44 so as to monitor the voltage of the AC primary side. The main body has a door 12 provided on the front face of the heating chamber 37 of the outlet place for food 51, a door switch 52 having a contact for opening, closing operations in accordance with opening, closing of the door 12 to interrupt the input to the high-voltage transformers 18, 18', a fuse 53 to be fused when excessive current flows into the AC primary side.

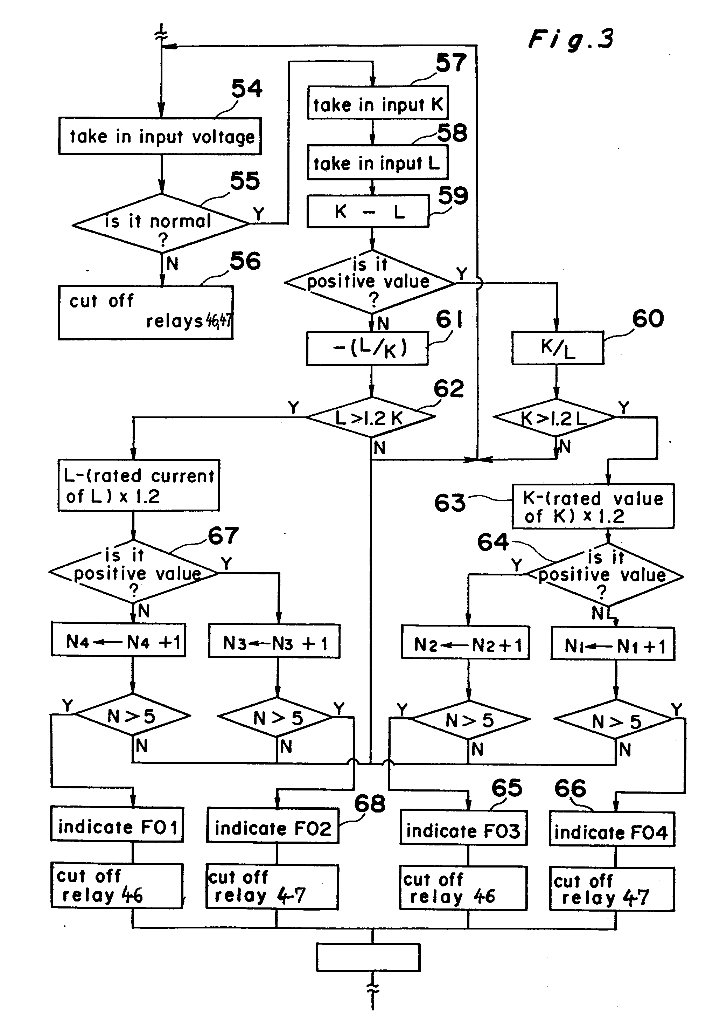

The control contents of the microcomputer circuit will be described with the use of the flow chart of Fig. 3.

Namely, the main body handles the input voltage from the input end 45 at a given period during the operation (step 54). It is judged whether or not the voltage value is within the range of a predetermined voltage (step 55). When the voltage deviates by 15% or more with respect to the rated voltage of the appliance, both the intermittent relays 46 and 47 are turned off to prevent generation of high frequency (step 56). It is possible that the operation is adapted not to be effected from the beginning if the voltage is abnormal with the voltage detection being provided even at the inoperative condition of the main body. The operation is continued when the voltage is within the normal range to temporarily store the voltage, caused in the coil 41 of the current transformer 22, in a memory (RAM) for taking in the DC voltage rectified and smoothed. This is assumed to be K (step 57). Similarly the DC output which has been detected by the coil 41' of the current transformer 22' is taken in. This is assumed to be L (step 58). If the difference between the values is positive, i.e., K is larger than L (step 59), the K operation of the K/L is effected (step 60). when it is negative, i.e., L is larger than K, the operation of - (L/K) is effected (step 61). In the embodiment, it is judged whether or not the result is larger than 1.2. Namely, judgment is caused to be made as to whether (step 62) the difference between K and L is 20% or more. If the value is smaller than 1.2 (namely, it is judged that nothing is wrong with two magnetrons, the value is within the range to be caused through normal tolerances of the parts, being the normal function), the routine returns to the initial one so as to handle the input voltage again. When K is larger than L with the difference between K and L being abnormal and higher than 20%, the value higher by 20% is felt (step 63) with respect to a value shown at the normal time of K predetermined from K to judge whether or not the value is positive or negative (step 64). When the value is positive, the current of K is abnormally large, i.e., is 1.2 times as much as the value of L and furthermore is larger than the rated current of the K. In the secondary current of the high-voltage transformer 18, a number $N_2$ for judging that the high-voltage capacitor 19 has been short-circuited is measured. When this condition has continued five times or more, the output to the intermittent relay 46 is cut, the contact of the intermittent relay 46 is opened to cut only the abnormal current flowing into the high-voltage transformer 18. F03 showing the abnormality in coded form is displayed on the fluorescent display tube 23 (step 65).

When the value is negative, the value of L is abnormally lower as compared with the normal condition. In the secondary circuit of the high-voltage transformer 18', it is judged that the short-circuit of the high-voltage diode 20', magnetron 9' and so on, or the portion of the secondary circuit has become opened. When the number $N_1$ has continued five times or more, the intermittent relay 47 is cut to turn off the current flowing to the high-voltage transformer 18'. The fluorescent display tube 23' displays F04 (step 66). Once the third intermittent relay 46 or the fourth intermittent relay 47 has been cut in any case, the retaining program is kept in the relay till the power supply is cut off.

When the L is larger than the K, and the difference is 20% or more, the value high by 20% is reduced from the L with respect to a value shown at the normal time of the predetermined L so as to judge whether the value is positive or negative (step 67). If the value is positive, the current of the L is assumed to be abnormal. In the secondary circuit of the high-voltage transformer 18', it is judged to be the short-circuit condition of the high-voltage capacitor 19 and so on to measure the number $N_3$. When this condition has been continued five times or more, the intermittent relay 47 is cut to turn off only the input to the high-voltage transformer 18'. The fluorescent display tube 23 displays F02 to notify the user of the abnormality (step 68). When the value has become negative, the K value is abnormally lower than the normal condition. It is judged that the high-voltage diode 20 and the magnetron 9 in the secondary circuit of the high-voltage transformer 18 have been short-circuited, or one portion of the secondary circuit has been opened. The number $N_4$ is counted. When this condition has continued five times or more, the third intermittent relay 46 is cut to turn off only the input to the high-voltage transformer 18. The fluorescent display tube 23 is adapted to display the F01. The measurement is effected every 0.1 second.

The above-description is given in connection with two magnetrons. When more magnetrons are provided, an appropriate number of current detecting means is provided. The differences between two are used in the calculation of A-B, B-C, C ... ... X-A from the detected signals A, B, C ... ... X. It is judged whether or not the differences are higher than the difference established through the consideration of tolerances. When there is difference therebetween, the circuit where the failure occurred is determined by the judgment of the size with respect to the value at the rated current predetermined as in the above-described embodiment so as to open the relay contact of only the circuit with the failure being caused therein.

As is clear from the foregoing description, according to the arrangement of the present invention, information obtained from the voltage detecting means, the current detecting means and the temperature detecting means is compared with the information predetermined by the major control portion in a heating apparatus having a digital control portion , the abnormality may be detected immediately and the abnormal content may be confirmed at a glance by the display means. Also, even if the abnormality is caused during the heating operation, the heating operation may be automatically stopped so that extreme safety is ensured. As the abnormal place is definite, much time is not required to repair the abnormal location.

The other heating means may continuously operate even if one of the others fails in the heating apparatus having a plurality of heating means. But if two high-frequency generating apparatuses (magnetrons) are provided for normal operation, the cooking time becomes larger when only a single magnetron is used. It may be used, thus resulting in considerable improvements.

The measured power-voltage is stored in the memory portion with the constant conditions by the use of the predetermined voltage detecting means to compare the content with the subsequent power voltage value, so that the error of the power voltage measuring circuit may be set off to ensure extremely high-precise measurement, detection, with the result that the considerable cost reduction may be provided as compared with the high-priced circuit component of extremely small dispersion.

## Claims

1. A control apparatus of an electric appliance having a plurality of functions which can be operated individually, particularly of a heating appliance having a plurality of heating means, comprising
   a plurality of load devices (9, 9') to achieve the functions,
   switching means (46, 47) to switch electric power to the load devices (9, 9'),
   input means (3') to select desired functions,
   display means (23') to display the operation of the load devices and the selected functions,
   and a control unit (44) to effect the operation of the load devices through the switching means (46, 47) in accordance with the functions selected by the input means (3') and to control the display means (23'),
   characterized by
   monitoring means (21', 22, 22') to monitor the operating conditions of the load devices (9, 9') and to judge these in comparison with normal conditions stored in the control unit (44), the control unit (44) disabling only those load devices (9, 9') in which abnormalities are detected, and displaying the abnormal condition on the display means (23').

2. A control apparatus in accordance with claim 1,
   wherein abnormalities detected by the monitoring means (21', 22, 22') are judged by comparing these with predetermined values stored in a memory of the control unit (44).

**3.** A control apparatus in accordance with claim 1,
wherein abnormalities detected by the monitoring means (21', 22, 22') are judged by comparing the values of one load device (9, 9') with the value of another load device (9', 9).

**4.** A control apparatus in accordance with any of claim 1, 2 or 3,
wherein the monitoring means are voltage detecting means (21') and current detecting means (22, 22').

**5.** A control apparatus in accordance with claim 1,
wherein the abnormalities are displayed on the display means (23') in coded form.

**Revendications**

**1.** Dispositif de commande d'un appareil électrique ayant une pluralité de fonctions qui peuvent être actionnées individuellement, particulièrement un appareil de chauffage ayant une pluralité de moyens de chauffage, comprenant :
une pluralité de dispositifs de charge (9, 9') pour réaliser les fonctions ;
un moyen de commutation (46, 47) pour commuter l'énergie électrique aux dispositifs de charge (9, 9') ;
un moyen d'entrée (3') pour sélectionner les fonctions souhaitées ;
un moyen d'affichage (23') pour afficher le fonctionnement du dispositif de charge et les fonctions sélectionnées ; et
une unité de commande (44) pour assurer le fonctionnement des dispositifs de charge au travers du moyen de commutation (46, 47) en relation avec les fonctions sélectionnées par le moyen d'entrée (3') et pour commander le moyen d'affichage (23'),
caractérisé par :
un moyen de surveillance (21', 22, 22') pour surveiller les conditions de fonctionnement des dispositifs de charge (9, 9') et pour porter une appréciation sur elles par comparaison avec des conditions normales stockées dans l'unité de commande (44), l'unité de commande (44) mettant hors fonction seulement les dispositifs de charge (9, 9') dans lesquels des anomalies sont détectées et affichant la condition anormale sur le moyen d'affichage (23').

**2.** Dispositif de commande selon la revendication 1, dans lequel des anomalies détectées par le moyen de surveillance (21', 22, 22') sont appréciées par comparaison de celles-ci avec des valeurs prédéterminées stockées dans une mémoire de l'unité de commande (44).

**3.** Dispositif de commande selon la revendication 1, dans lequel des anomalies détectées par le moyen de surveillance (21', 22, 22') sont appréciées par comparaison des valeurs d'un dispositif de charge (9, 9') avec la valeur d'un autre dispositif de charge (9' ,9).

**4.** Dispositif de commande selon l'une quelconque des revendications 1, 2 ou 3, dans lequel le moyen de surveillance est constitué par un moyen de détection de tension (21') et un moyen de détection de courant (22, 22').

**5.** Dispositif de commande selon la revendication 1, dans lequel les anomalies sont affichées sur le moyen d'affichage (23') sous une forme codée.

**Patentansprüche**

**1.** Steuervorrichtung für ein elektrisches Gerät mit einer Mehrzahl von Funktionen, die einzeln durchgeführt werden können, insbesondere eines Heizgerätes mit mehreren Heizvorrichtungen;
mit einer Mehrzahl von Lastanordnungen (9, 9') zur Durchführung der Funktionen,
mit Schaltmitteln (46, 47) zum Anschalten elektrischer Leistung an die Lastanordnungen (9, 9'),
mit Eingabemitteln (3') zur Auswahl der gewünschten Funktionen,
mit Anzeigevorrichtungen (23') zum Anzeigen der Arbeitsweise der Lastanordnungen und der ausgewählten Funktionen und
mit einer Steuereinheit (44) zur Steuerung der Arbeitsweise der Lastanordnungen durch die Schaltmittel (46, 47) in Übereinstimmung mit den durch die Eingabemittel (3') ausgewählten Funktionen und zur Steuerung der Anzeigevorrichtung (23'),
gekennzeichnet durch Überwachungsmittel (21', 22, 22') zur Überwachung der Arbeitszustände der Lastanordnungen (9, 9') und zur Beurteilung dieser Arbeitszustände im Vergleich mit Normalzuständen, die in der Steuereinheit (44) gespeichert sind,
wobei die Steuereinheit (44) nur diejenigen Lastanordnungen (9, 9') außer Betrieb setzt, in denen Unregelmäßigkeiten festgestellt wurden, und gleichzeitig den unregelmäßigen Zustand auf der Anzeigevorrichtung (23') anzeigt.

**2.** Steuervorrichtung nach Anspruch 1,

dadurch gekennzeichnet, daß die durch die Überwachungsmittel (21', 22, 22') überwachten Unregelmäßigkeiten in der Weise beurteilt werden, daß sie mit vorherigen Werten verglichen werden, die im Speicher der Steuereinheit (44) gespeichert sind.

3. Steuervorrichtung nach Anspruch 1, dadurch gekennzeichnet, daß die durch die Überwachungsmittel (21', 22, 22') festgestellten Unregelmäßigkeiten beurteilt werden durch Vergleich der Werte einer Lastanordnung (9, 9') mit den Werten einer anderen Lastanordnung (9', 9).

4. Steuervorrichtung nach einem der Ansprüche 1, 2 oder 3, dadurch gekennzeichnet, daß die Überwachungsmittel Spannungsdetektormittel (21') und Stromdetektormittel (22, 22') sind.

5. Steuervorrichtung nach Anspruch 1, dadurch gekennzeichnet, daß die Unregelmäßigkeiten auf der Anzeigevorrichtung (23') in kodierter Form angezeigt werden.

## Fig. 1

## Fig.2

commutating-smoothing circuit

PROG

*Fig.3*

```
                                          ┌──────────────────┐ 57
                                          │  take in input K │
                                          └──────────────────┘
                          54              ┌──────────────────┐ 58
        ┌──────────────────────┐          │  take in input L │
        │ take in input voltage│          └──────────────────┘
        └──────────────────────┘          ┌──────────────────┐ 59
                    │              55      │      K − L       │
                    ▼                      └──────────────────┘
              ╱───────────╲  Y                     │
             ╱ is it normal ╲────────┐             ▼
             ╲      ?       ╱        │        ╱───────────╲
              ╲───────────╱         │       ╱    is it     ╲  Y
                    │ N       56    │      ╱ positive value ╲──────────┐
                    ▼               │      ╲       ?        ╱          │
        ┌──────────────────┐        │       ╲───────────╱             │
        │  cut off         │        │             │ N      61         ▼
        │     relays 46,47 │        │             ▼              ┌──────────┐ 60
        └──────────────────┘        │       ┌──────────┐        │   K/L    │
                                    │       │  −(L/K)  │         └──────────┘
                                    │       └──────────┘              │
                                    │             │     62            ▼
                                    │             ▼            ╱───────────╲ Y
                               Y    │       ╱───────────╲     ╱  K>1.2 L    ╲──┐
                   ┌────────────────┼──────╱  L>1.2 K    ╲    ╲             ╱  │
                   │                │      ╲             ╱     ╲───────────╱   │
                   ▼                │       ╲───────────╱           │ N        │
        ┌──────────────────┐       │             │ N               ▼          │
        │ L−(rated current │       │             │          ┌──────────────┐  │
        │  of L) x 1.2     │       │       63    │          │ K−(rated value│ │
        └──────────────────┘       │             │          │  of K) x 1.2  │ │
                   │               │             │          └──────────────┘  │
                   ▼         67    │             │                │      64   │
             ╱───────────╲         │             │                ▼           │
            ╱    is it     ╲ Y     │             │          ╱───────────╲     │
           ╱ positive value ╲──┐   │             │      Y  ╱    is it     ╲    │
           ╲       ?        ╱  │   │             │   ┌────╱ positive value ╲   │
            ╲───────────╱     │   │             │   │    ╲       ?        ╱   │
                  │ N         │   │             │   │     ╲───────────╱      │
                  ▼           ▼   │             │   │           │ N          │
         ┌──────────┐  ┌──────────┐│            │   ▼           ▼            │
         │N4←N4 +1  │  │N3←N3 +1  ││            │ ┌──────────┐ ┌──────────┐  │
         └──────────┘  └──────────┘│            │ │N2←N2+1   │ │N1←N1+1   │  │
              │             │      │            │ └──────────┘ └──────────┘  │
              ▼             ▼      │            │      │           │         │
         ╱─────────╲   ╱─────────╲ │            │ ╱─────────╲ ╱─────────╲    │
      Y ╱  N>5     ╲  ╱   N>5    ╲ Y            Y╱  N>5     ╲╱   N>5     ╲ Y  │
     ┌─╱           ╲ ╱           ╲─┐           ┌╱           ╲            ╲─┐ │
     │  ╲─────────╱   ╲─────────╱  │           │ ╲─────────╱ ╲─────────╱  │ │
     │       │ N          │ N      │           │     │ N         │ N      │ │
     │       │            │        │           │     │           │        │ │
     ▼       ▼            ▼        ▼           ▼     ▼           ▼        ▼ │
  ┌───────────┐    ┌───────────┐        68  ┌───────────┐  ┌───────────┐  │
  │indicate FO1│    │indicate FO2│  65       │indicate FO3│  │indicate FO4│ 66
  └───────────┘    └───────────┘           └───────────┘  └───────────┘
  ┌───────────┐    ┌───────────┐           ┌───────────┐  ┌───────────┐
  │ cut off   │    │ cut off   │           │ cut off   │  │ cut off   │
  │ relay 46  │    │ relay 47  │           │ relay 46  │  │ relay 47  │
  └───────────┘    └───────────┘           └───────────┘  └───────────┘
```